# EUROPEAN PATENT APPLICATION

(11) **EP 4 832 324 A1**
(43) Date of publication of application: **28.10.2026**
(21) Application number: 23962292.1
(22) Date of filing: 22.12.2023
(51) Int. Cl.: H02M 1/08, H02M 1/38, H02M 7/48

(54) **GATE DRIVE CONTROL DEVICE AND POWER CONVERSION DEVICE**

(71) Applicant: Astemo, Ltd., Chiyoda-ku, Tokyo 1000004 (JP)
(72) Inventor: ARAFUNE, Takuya, Hitachinaka-shi, Ibaraki 312-8503 (JP); DOI, Masahiro, Hitachinaka-shi, Ibaraki 312-8503 (JP); IKUYAMA, Takeshi, Hitachinaka-shi, Ibaraki 312-8503 (JP); YAHATA, Koichi, Hitachinaka-shi, Ibaraki 312-8503 (JP)
(74) Representative: MERH-IP Matias Erny Reichl Hoffmann Patentanwälte PartG mbB
(86) International application number: PCT/JP2023/046230
(87) International publication number: WO 2025/134376

(57) **Abstract**

A gate drive control device is a gate drive control device that drives a gate of a first semiconductor element, and includes a mirror clamp circuit that when a gate voltage of the first semiconductor element falls below a predetermined control threshold, holds the gate voltage at a low level; and a gate monitor circuit that detects that the gate voltage of the first semiconductor element has fallen below a predetermined detection threshold of positive potential. In the gate drive control device, when the first semiconductor element is turned off, the gate monitor circuit detects that the gate voltage of the first semiconductor element has fallen below the detection threshold, simultaneously with, or after, a start of operation of the mirror clamp circuit.

## Description

### Technical Field

The present invention relates to a gate drive control device that drives a gate of a semiconductor element, and a power conversion device using the gate drive control device.

### Background Art

A power conversion device has functions such as alternating current (AC)-direct current (DC) conversion and DC-AC conversion of electric power (hereinafter, simply power), frequency conversion of AC power, and voltage conversion of DC power. To provide such conversion functions, a power conversion device includes a power conversion circuit that converts power by on-off operation of a power semiconductor module having a switching function. A power semiconductor module is turned on by controlling a gate voltage between a gate terminal and a source terminal (or an emitter terminal) to high (positive voltage), and is turned off by controlling the gate voltage to low (0 V or negative voltage), by a gate drive circuit. The gate drive circuit is controlled by a higher-level controller.

Examples of the power semiconductor module include a 1-in-1 module, which incorporates a single semiconductor switching element or a plurality of parallel-connected semiconductor switching elements (hereinafter each referred to as "switching element"), and a 2-in-1 module, which incorporates two switching elements connected to each other in series inside the module to form a half-bridge circuit in a single module.

PTL 1 describes a power semiconductor drive circuit. PTL 1 describes that a power semiconductor drive circuit includes "a parallel circuit connected to the gate side of the power semiconductor element and including at least two transistors that set a gate resistance of the power semiconductor element, and a gate voltage monitoring circuit connected to the gate side of the power semiconductor element and to the parallel circuit and having a predetermined monitoring voltage that has been set for monitoring the gate voltage of the power semiconductor element" and "a signal delay circuit that delays an output signal from the gate voltage monitoring circuit, and a gate control circuit that switches a magnitude of a combined resistance of the parallel circuit on the basis of the output signal output from the signal delay circuit side".

Silicon (Si) devices have been used for switching elements. In recent years, silicon carbide (SiC) devices, which are excellent in low on-resistance, high-speed switching, high-temperature operability, and the like, are becoming increasingly widespread for improvement of performance of power conversion circuits. A semiconductor element using SiC will be hereinafter referred to as "SiC device".

An active dead time configuration has been proposed in which a gate driver IC (GDIC) performs dead time control to reduce the dead time to address SiC high-speed driving. In the active dead time configuration, a gate monitor signal of the GDIC of a self arm is input to the GDIC of the opposite arm, which in turn leads to determination that the SiC device of the opposite arm has been turned off, thereby allowing the SiC device of the self arm to be turned on.

### Citation List

### Patent Literature

PTL 1: JP 2019-080359 A

### Summary of Invention

### Technical Problem

In the active dead time configuration, a mirror clamp circuit that controls the gate at low impedance and a gate voltage monitoring circuit that monitors the gate voltage of a semiconductor element are connected to each arm. The mirror clamp circuit is a circuit that holds a gate voltage of a semiconductor element at a low level when the gate voltage falls below a predetermined control threshold. The gate voltage monitoring circuit is a circuit that determines that the gate is in an off-state when the gate voltage of the semiconductor element has fallen below an off-state detection threshold, and determines that the gate is in an on-state when the gate voltage has exceeded an on-state detection threshold. The off-state detection threshold of the GDIC is conventionally set higher than an operation threshold of the mirror clamp circuit. This setting may cause the gate monitor signal to be detected as indicating an off-state even when the SiC device of the self arm is in a half on-state. In addition, superimposition of switching noise of the other-phase arm on the gate voltage in a half on-state may cause the SiC device of the self arm to be turned on again. The active dead time configuration may therefore cause short-circuiting between the upper and lower arms.

The present invention has been made in view of the above circumstances, and an object of the present invention is to prevent a short circuit between upper and lower arms while driving semiconductor elements included in the arms at high speed in a gate drive control device including a mirror clamp circuit and a gate voltage monitoring circuit.

### Solution to Problem

To solve the above problem, a gate drive control device according to one aspect of the present invention is a gate drive control device that drives a gate of a first semiconductor element. The gate drive control device includes a mirror clamp circuit that when a gate voltage of the first semiconductor element falls below a predetermined control threshold, holds the gate voltage at a low level; and a gate monitor circuit that detects that the gate voltage of the first semiconductor element has fallen below a predetermined detection threshold of positive potential. In the gate drive control device, in addition, the gate monitor circuit is configured to, when the first semiconductor element is turned off, detect that the gate voltage of the first semiconductor element has fallen below a detection threshold, simultaneously with, or after, a start of operation of the mirror clamp circuit.

### Advantageous Effects of Invention

According to at least one aspect of the present invention, the gate monitor circuit detects a gate turn-off after the mirror clamp circuit operates to ensure a gate turn-off of the semiconductor element of the self arm. Such operation enables a gate turn-off detection result to be obtained with higher certainty. A configuration in which a control computer generates a dead time using a gate turn-off detection result can prevent a short circuit between the upper and lower arms while driving the semiconductor elements included in the arms at high speed.

Problems, configurations, and effects other than those described above will be clarified by the following description of embodiments.

### Brief Description of Drawings

[FIG. 1] FIG. 1 is a block diagram illustrating an example of a configuration of an inverter device including gate drive control devices according to a first embodiment of the present invention.
[FIG. 2] FIG. 2 is a diagram illustrating an example of a configuration of a gate monitor unit according to the first embodiment of the present invention.
[FIG. 3] FIG. 3 is an example of a timing chart schematically illustrating a gate detection operation performed by the gate monitor unit according to the first embodiment of the present invention.
[FIG. 4] FIG. 4 is a diagram illustrating an example of a minimum configuration of the gate monitor unit according to the first embodiment of the present invention.
[FIG. 5] FIG. 5 is a diagram illustrating an example of a configuration of an inverter device according to a second embodiment of the present invention.
[FIG. 6] FIG. 6 is an example of a timing chart schematically illustrating a gate drive operation performed by the inverter device according to the second embodiment of the present invention.
[FIG. 7] FIG. 7 is a diagram illustrating an example of a configuration (option 1) of an inverter device according to a third embodiment of the present invention.
[FIG. 8] FIG. 8 is a diagram illustrating an example of a configuration (option 2) of the inverter device according to the third embodiment of the present invention.
[FIG. 9] FIG. 9 is an example of a timing chart schematically illustrating a gate drive operation according to the third embodiment of the present invention.
[FIG. 10] FIG. 10 is a diagram illustrating an example of a configuration of a gate monitor unit according to a fourth embodiment of the present invention.
[FIG. 11] FIG. 11 is an example of a timing chart schematically illustrating a threshold change operation according to the fourth embodiment of the present invention.
[FIG. 12] FIG. 12 is a diagram illustrating a modification of the configuration (separated configuration) of each of the gate monitor units according to the embodiments of the present invention.
[FIG. 13] FIG. 13 is a diagram illustrating a modification of the configuration (partially shared threshold configuration) of each of the gate monitor units according to the embodiments of the present invention.

### Description of Embodiments

Examples of modes for carrying out the present invention (hereinafter each referred to as "embodiment") will hereinafter be described with reference to the accompanying drawings.

In the present specification and the accompanying drawings, components the same as or similar to each other are denoted by a same reference numeral, and redundant description may be omitted or otherwise only description focusing on differences may be provided. In addition, in a case where a plurality of components the same as or similar to each other are present, description may be provided using a same reference numeral suffixed with different subscripts. Note that, in a case where there is no need to distinguish such plurality of components, description may be provided without subscripts. The number of components of a same type may be singular or plural unless otherwise specified.

Before describing the present invention, a description will be supplementarily provided with respect to a reason why the off-state detection threshold of the GDIC is conventionally set higher than the operation threshold of the mirror clamp circuit. Gate monitoring results have conventionally been used only in a monitoring function for diagnostic purposes. To reduce an error between the on/off detection timing of an actual power device and the on/off operation timing of the actual power device, the conventional off-state detection threshold is set to a value close to the gate threshold of the actual power device.

However, an active dead time configuration in the present invention described later requires use of a gate monitoring result not only in a monitoring function but also as a gate input signal to the opposite arm. Therefore, when a power device is turned off once and then noise or the like generated upon gate turn-off causes the power device to be erroneously turned on again, the opposite arm will be turned on as a result of the first gate turn-off, and a short circuit will occur between the upper and lower arms due to the self arm that is erroneously turned on. To avoid this, in the present invention, a determination that the gate is turned off is made after the mirror clamp operation (i.e., after the gate is turned off completely).

In addition, driving by an insulated gate bipolar transistor (IGBT) is conventionally assumed. An SiC device, which can provide high speed driving, has a transition time (delay time) of the gate voltage shorter than that of the IGBT, and has a small effect of a difference between the actual gate threshold and the off-state detection threshold.

An inverter causes a large current to flow intermittently through the power device (semiconductor element), thereby generating large noise upon a gate turn-on and/or a gate turn-off of the self-phase arm and/or the other-phase arm. In fact, common mode noise generated upon driving of the gate of the other-phase arm may cause the gate of the self-phase arm to be erroneously turned on again after being turned off once. If the above-described erroneous turn-on occurs in the inverter having the active dead time configuration, turn-on of the power device of the opposite arm upon the first gate turn-off and erroneous turn-on of the power device of the self arm will cause a short circuit between the upper and lower arms.

A gate drive control device capable of more reliably detecting a gate turn-off can avoid the above-described short circuit between the upper and lower arm circuits in an inverter having the active dead time configuration. This can provide improvement in reliability of an inverter, and thus further improvement in safety of an automobile.

### <First Embodiment>

A gate drive control device and a power conversion device according to a first embodiment of the present invention will first be described.

### [Configuration of Inverter Device]

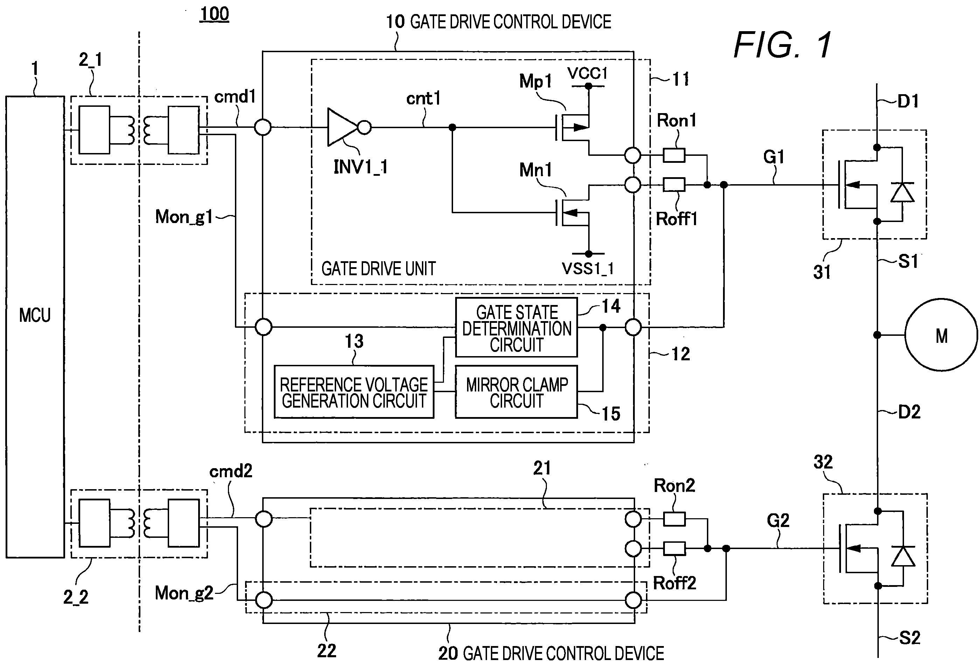

FIG. 1 is a block diagram illustrating an example of a configuration of an inverter device including gate drive control devices according to the first embodiment of the present invention.

An inverter device 100 (which is an example of a power conversion device) illustrated in FIG. 1 includes a first semiconductor element 31 functioning as an upper arm and a second semiconductor element 32 functioning as a lower arm. In FIG. 1, the first semiconductor element 31 and the second semiconductor element 32 are each an n-channel metal-oxide-semiconductor field-effect transistor (MOSFET) made using SiC. However, the first semiconductor element 31 and the second semiconductor element 32 are not limited to this example. For example, the present invention is suitable for application to a transistor having excellent high-speed switching properties, such as a transistor made using SiC.

The inverter device 100 controls switching operations of the first semiconductor element 31 and the second semiconductor element 32 on the basis of a command from a micro-control unit (MCU) 1 to thereby supply power to a load. The load is, for example, a motor. The MCU 1 is a microcontroller and is an example of a control computer. In the MCU 1, an arithmetic processing unit (for example, central processing unit (CPU)), a memory device (random access memory (RAM) or read-only memory (ROM)), an input/output circuit (I/O), a timer circuit, and the like are mounted on one integrated circuit.

The inverter device 100 includes a gate drive control device 10, which controls switching operation of the first semiconductor element 31, and a gate drive control device 20, which controls switching operation of the second semiconductor element 32. The gate drive control device 10 controls a gate voltage to be supplied to the first semiconductor element 31, and the gate drive control device 20 controls a gate voltage to be supplied to the second semiconductor element 32.

The MCU 1 and the gate drive control device 10 are electrically insulated from each other by a signal transmission unit 2_1. The signal transmission unit 2_1 has an input-side portion and an output-side portion magnetically coupled to each other, and transmits a signal while maintaining an electrically insulating state between the input-side portion and the output-side portion. The MCU 1 and the gate drive control device 10 exchange signals therebetween via the signal transmission unit 2_1. Examples of the signal transmission unit 2_1 include a signal transmission unit realized by magnetic coupling using a transformer and a signal transmission unit realized by light using a photocoupler.

The following description will describe the gate drive control device 10, which description also applies to the gate drive control device 20.

The gate drive control device 10 includes a gate state determination circuit 14, a mirror clamp circuit 15, and a reference voltage generation circuit 13. The gate state determination circuit 14 detects a gate turn-off of the first semiconductor element 31 simultaneously with, or after, the start of operation of the mirror clamp circuit 15. A configuration and operation of such gate drive control device 10 will next be described.

The gate drive control device 10 includes a gate drive unit 11 and a gate monitor unit 12.

The gate drive unit 11 controls a gate G1 of the first semiconductor element 31 on the basis of a drive command cmd1 input from the MCU 1 via the signal transmission unit 2_1.

The gate monitor unit 12 determines a gate state from the voltage of the gate G1 (hereinafter, gate G1 voltage) and outputs a gate state determination result on a gate monitor signal Mon_g1. In addition, the gate monitor unit 12 controls the gate G1 at low impedance on the basis of the gate state determination result.

### (Gate drive unit)

The gate drive unit 11 includes a transistor Mp1, a transistor Mn1, and a NOT circuit INV1_1. The transistor Mp1 is a p-channel MOSFET, and the transistor Mn1 is an n-channel MOSFET. The NOT circuit INV1_1 inverts the logical level of the drive command cmd1 and outputs a resulting signal. The output signal of the NOT circuit INV1_1 is input to the gates of the transistor Mp1 and of the transistor Mn1 as a switching control signal cnt1.

Transition of the drive command cmd1 to a logical high level (hereinafter referred to as "High") causes the switching control signal cnt1 to transition to a logical low level (hereinafter referred to as "Low") by the NOT circuit INV1_1. As a result, the transistor Mp1 is turned on, and the transistor Mn1 is turned off. The gate G1 is at High, and the first semiconductor element 31 is turned on.

Meanwhile, transition of the drive command cmd1 to Low causes the switching control signal cnt1 to transition to High by the NOT circuit INV1_1. As a result, the transistor Mp1 is turned off, and the transistor Mn1 is turned on. The gate G1 is at Low, and the first semiconductor element 31 is turned off.

A resistor Ron1, which is provided between the drain of the transistor Mp1 and the gate G1, and a resistor Roff1, which is provided between the drain of the transistor Mn1 and the gate G1, are provided to adjust the speed of raising and/or decreasing the gate G1 voltage.

### (Gate monitor unit)

The gate monitor unit 12 includes the gate state determination circuit 14, the mirror clamp circuit 15, and the reference voltage generation circuit 13.

The gate state determination circuit 14 (which is an example of gate monitor circuit) compares the gate G1 voltage with a gate state determination threshold (hereinafter referred to as "Vth_mon") to determine the on/off state of the first semiconductor element 31, and outputs the on/off state determined, on the gate monitor signal Mon_g1. The gate state determination threshold corresponds to the above-described on-state determination threshold. In addition, since the present embodiment relates to timing of detection of an off-state of a semiconductor element, the gate state determination threshold can also be said to be an off-state determination threshold.

The mirror clamp circuit 15 controls the gate G1 at low impedance when the gate G1 voltage is less than a mirror clamp operation threshold (hereinafter referred to as "Vth_mc"). That is, the mirror clamp circuit 15 is a circuit that holds the gate voltage of a semiconductor element at a low level when the gate voltage falls below a predetermined control threshold.

The reference voltage generation circuit 13 generates a reference voltage for determining Vth_mon and Vth_mc.

The gate monitor signal Mon_g1 including the gate state determination result is input to the MCU 1 via the signal transmission unit 2_1. The MCU 1 then outputs a turn-on command to the gate drive control device 20 in the opposite arm via a signal transmission unit 2_2 in response to the off-state decision indicated by the gate state determination result of the first semiconductor element 31. The gate state determination result of the first semiconductor element 31 input to the MCU 1 is used for, for example, adjustment of timing of driving the second semiconductor element 32.

The gate drive control device 20 includes, similarly to the gate drive control device 10, a gate drive unit 21 and a gate monitor unit 22. The gate drive control device 20 operates in the same manner as the gate drive control device 10, and description thereof will therefore be omitted.

Note that the gate drive unit 11 of the present embodiment is illustrated using an example configuration in which the output terminal of the transistor Mp1 and the output terminal of the transistor Mn1 are two different terminals, but the outputs of the transistor Mp1 and the transistor Mn1 may share one terminal. In addition, the configuration of the gate drive unit 11 is not limited to a p-channel MOS-n-channel MOS configuration, but may also be a p-channel MOS-p-channel MOS configuration or an n-channel MOS-n-channel MOS configuration. Moreover, in a case where no negative voltage is to be generated, the source potential (VSS1_1) of the transistor Mn1 is connected to the same potential as the source potential. In the case where a negative voltage is to be generated, the source potential (VSS1_1) of the transistor Mn1 is connected to the same potential as the source potential or a potential (for example, a negative power supply voltage) lower than the source potential.

### [Configuration of Gate Monitor Unit]

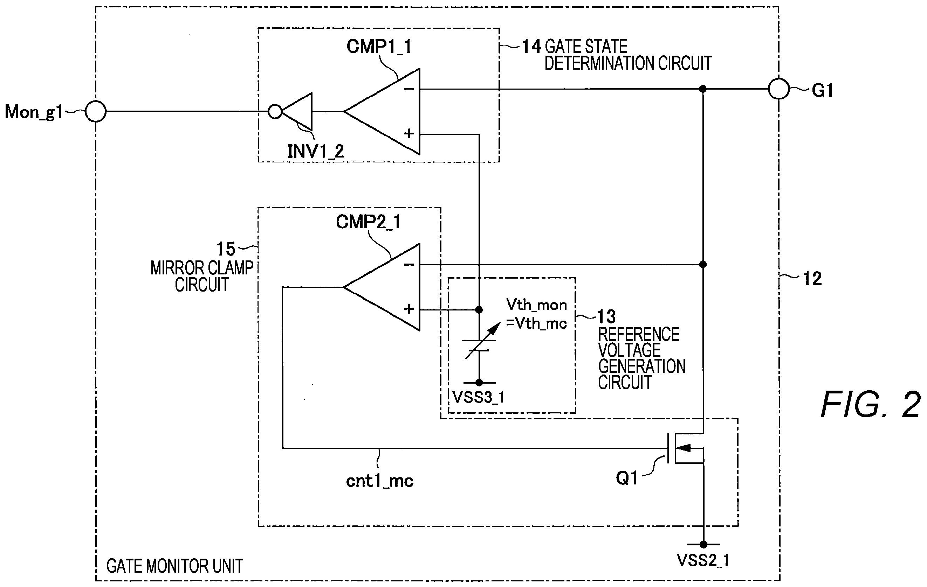

The gate monitor unit 12 according to the present embodiment will next be described in more detail with reference to FIG. 2.

FIG. 2 is a diagram illustrating an example of a configuration of the gate monitor unit 12.

### (Reference voltage determination circuit)

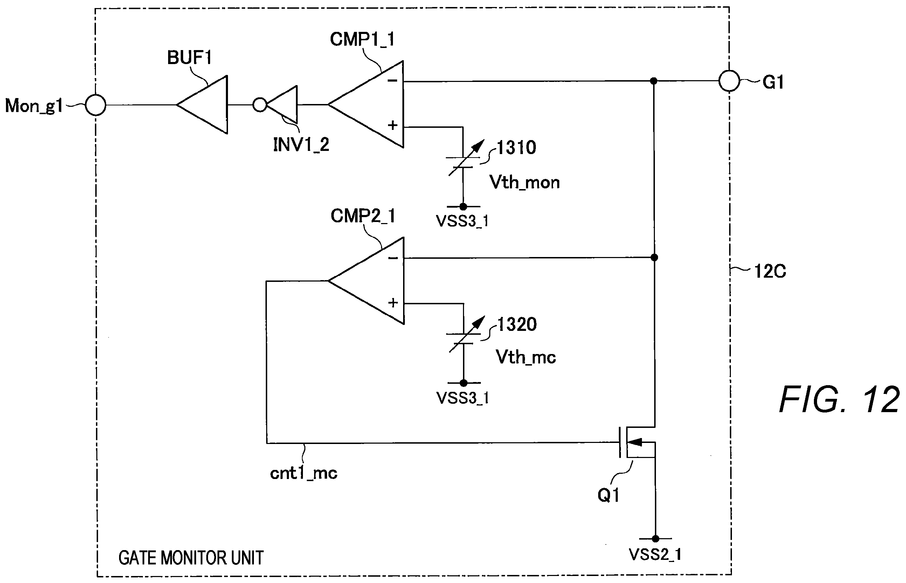

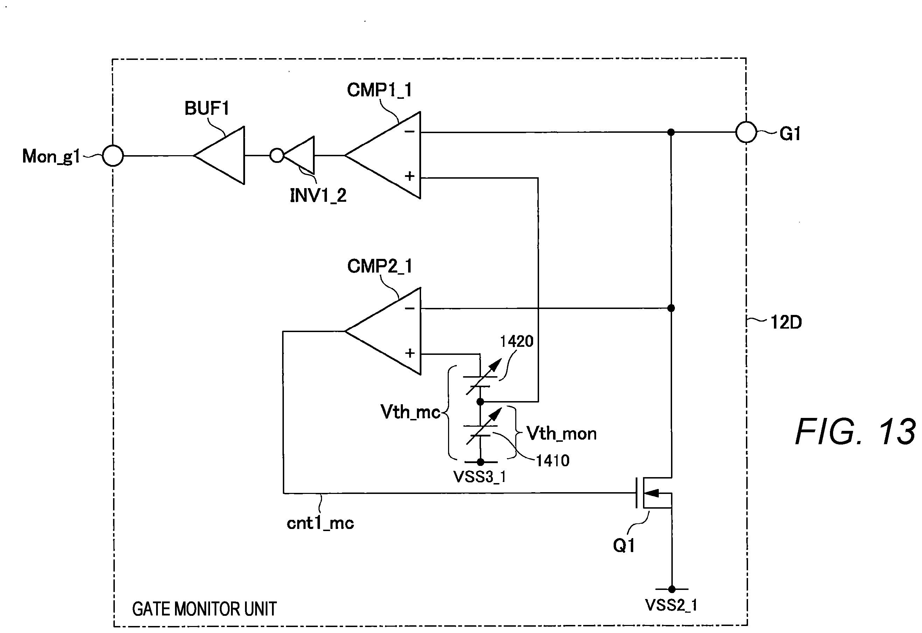

The reference voltage generation circuit 13 generates a voltage of Vth_mon (gate state determination threshold) and a voltage of Vth_mc (mirror clamp operation threshold). The present embodiment assumes that Vth_mon and Vth_mc have a same value. FIG. 2 illustrates a configuration in which Vth_mon and Vth_mc have a common reference voltage. Note that in cases such as a case where Vth_mon and Vth_mc have different values, the configuration may be such that the reference voltages are individually generated as illustrated in FIGS. 12 and 13.

### (Gate state determination circuit)

The gate state determination circuit 14 includes a comparator CMP1_1 receiving two inputs that are the voltage of Vth_mon and the voltage of the gate G1, and includes a NOT circuit INV1_2, which inverts the logical value output from CMP1_1. As an example, the comparator CMP1_1 has a non-inverting input terminal to which the voltage of Vth_mon is input, and an inverting input terminal to which the voltage of the gate G1 is input, and outputs a gate state determination result to the NOT circuit INV1_2. When the voltage of the gate G1 is less than Vth_mon, the comparator CMP1_1 outputs an off-state decision (Low in the present embodiment) indicating the gate turn-off state, on the gate monitor signal Mon_g1 via the INV1_2. Alternatively, when the gate G1 voltage is equal to or higher than Vth_mon, the comparator CMP1_1 outputs an on-state decision (High in the present embodiment) indicating the gate turn-on state, on the gate monitor signal Mon_g1 via the INV1_2.

Note that the configuration may be such that the gate G1 is connected to the non-inverting input terminal and Vth_mon is connected to the inverting input terminal, of the comparator CMP1_1. In this case, the NOT circuit INV1_2 becomes unnecessary.

### (Mirror clamp circuit)

The mirror clamp circuit 15 includes a comparator CMP2_1 and a mirror clamp transistor Q1.

The comparator CMP2_1 is a comparator receiving two inputs that are the voltage of Vth_mc and the voltage of the gate G1. As an example, the voltage of Vth_mc is input to the non-inverting input terminal, and the voltage of the gate G1 is input to the inverting input terminal. When the gate G1 voltage is less than Vth_mc, the comparator CMP2_1 outputs a low-impedance control command (High in the present embodiment) on a mirror clamp control signal cnt1_mc. When the gate G1 voltage is equal to or higher than Vth_mc, the comparator CMP2_1 outputs a high-impedance control command (Low in the present embodiment) on the mirror clamp control signal cnt1_mc.

Note that a reference potential (VSS3_1) of Vth_mon and of Vth_mc is connected to the same potential as the source potential.

In addition, the mirror clamp transistor Q1 has a source potential (VSS2_1) connected to the same potential as the source potential or a potential (for example, a negative power supply voltage) lower than the source potential.

The mirror clamp transistor Q1 controls the gate G1 of the first semiconductor element 31 at low impedance on the basis of the mirror clamp control signal cnt1_mc, which is an output of the comparator CMP2_1. The mirror clamp transistor Q1 is turned on when the mirror clamp control signal cnt1_mc is a low-impedance control command (High). Electric conduction between the drain and the source of the mirror clamp transistor Q1 provides low impedance between the gate G1 and the source (VSS2_1). This causes the voltage of the gate G1 to be held at a low level. The mirror clamp transistor Q1 can be, but not limited to, an n-channel MOSFET by way of example.

### [Gate Detection Operation]

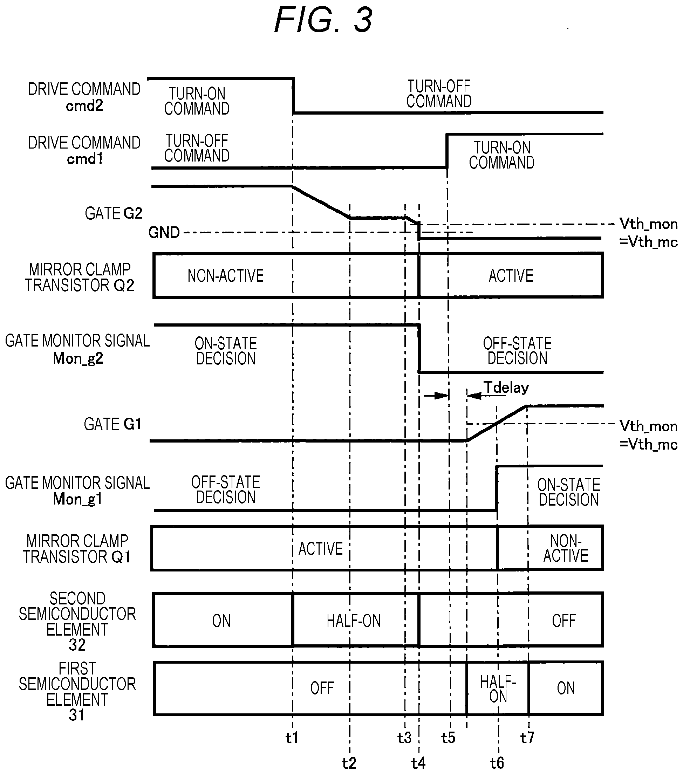

A gate detection operation performed in the gate drive control device 10 including the gate monitor unit 12 will next be described with reference to FIG. 3.

FIG. 3 is an example of a timing chart schematically illustrating a gate detection operation performed by the gate monitor unit 12.

At time t1: A turn-off command (Low) is input on a drive command cmd2 while a turn-off command is input on the drive command cmd1. Turning off of a transistor Mp2 (not illustrated) and turning on of a transistor Mn2 (not illustrated) in the gate drive control device 20 causes the potential of the gate G2 (hereinafter, gate G2 potential) of the second semiconductor element 32 to start to decrease. The transistor Mp2 and the transistor Mn2 respectively correspond to the transistor Mp1 and the transistor Mn1 in the gate drive control device 10.

At time t2: The gate G2 voltage reaches the mirror voltage of the second semiconductor element 32, and the gate G2 potential becomes constant.

At time t3: After a drain D2 voltage of the second semiconductor element 32 rises, the gate G2 potential starts to decrease.

At time t4: The gate G2 potential falls below Vth_mc, and the mirror clamp circuit 15 starts operation and performs control to provide low impedance between the gate G2 and VSS2_2, thereby causing the gate G2 potential to decrease to the VSS2_2 potential. At the same time, the gate G2 potential falls below Vth_mon, thereby causing an off-state decision (Low) result to be output on a gate monitor signal Mon_g2. The second semiconductor element 32 is in a half-on state during a period from time t1 when the gate G2 potential starts to decrease to time t4 when the gate G2 potential fully decreases to VSS2_2.

At time t5: The MCU 1 outputs a turn-on command (High) on the drive command cmd1 in response to transition of the gate monitor signal Mon_g2 to Low. A period from time t4 when the gate monitor signal Mon_g2 transitions to Low to a time point when Tdelay has elapsed and the gate G1 starts to rise, is a dead time. When the turn-on command (High) is input on the drive command cmd1, the transistor Mp1 is turned on and the transistor Mn1 is turned off in the gate drive control device 10 after the delay time (Tdelay). This causes the potential of the gate G1 of the first semiconductor element 31 to start to rise.

At time t6: The potential of the gate G1 of the second semiconductor element 32 reaches or exceeds Vth_mon, thereby causing an on-state decision (High) to be output on the gate monitor signal Mon_g1. At the same time, the mirror clamp transistor Q1 stops its operation.

At time t7: The potential of the gate G1 of the first semiconductor element 31 rises to VCC1 (FIG. 1), thereby causing the first semiconductor element 31 to transition to an on-state.

In the gate monitor unit 12 according to the present embodiment described above, the detection threshold (Vth_mon) of the gate state determination circuit 14 is set to the same value as the control threshold (Vth_mc) of the mirror clamp circuit 15.

In the present embodiment, such configuration causes a gate turn-off to be detected simultaneously with, or after, the start of operation of the mirror clamp circuit, thereby enabling a gate turn-off to be detected with higher certainty than in a conventional technology.

In addition, sharing the reference voltage as illustrated in FIG. 2 enables the circuit area to be reduced as compared with the conventional technology, and the cost and size to thus be reduced.

Note that the mirror clamp circuit may be configured to stop operation simultaneously with inputting of a turn-on command to the gate drive unit of the self arm.

### [Minimum Configuration of Gate Monitor Unit]

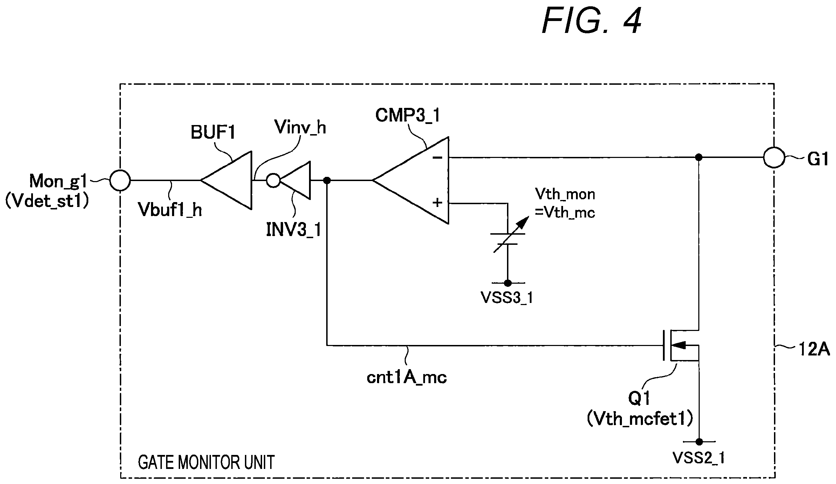

An example of a minimum configuration of the gate monitor unit in the present embodiment will next be described with reference to FIG. 4.

FIG. 4 is a diagram illustrating an example of a minimum configuration of the gate monitor unit.

A gate monitor unit 12A illustrated in FIG. 4 enables reduction in the number of comparators by one by consolidating the comparator CMP1_1 and the comparator CMP2_1 illustrated in FIG. 2. Note that the following description focuses on a part of the configuration of the gate monitor unit 12A that is different from the configuration of the gate monitor unit 12 illustrated in FIG. 2.

Focusing on the part of the configuration different from the configuration illustrated in FIG. 2 described above, the gate monitor unit 12A includes a comparator CMP3_1 instead of the combination of the comparator CMP1_1 and the comparator CMP2_1. In addition, the gate monitor unit 12A includes a buffer circuit BUF1 on the output line of the comparator CMP3_1. A NOT circuit INV3_1 is connected between an input side of the buffer circuit BUF1 and an output side of the comparator CMP3_1.

The comparator CMP3_1 compares two inputs that are the voltage of the gate G1 and the voltage of Vth_mon (=Vth_mc), and outputs the comparison result on a mirror clamp control signal cnt1A_mc. The comparator CMP3_1 operates in the same manner as the comparator CMP2_1, and detailed operation description thereof will therefore be omitted. In addition, the NOT circuit INV3_1 operates in the same manner as the NOT circuit INV1_2, and detailed operation description thereof will therefore be omitted.

The buffer circuit BUF1 adjusts the logic level output from the NOT circuit INV3_1 to a desired logic level (i.e., a voltage level sufficient for the signal transmission unit 2_1 to determine a logical value), and outputs the resulting logic level as the gate monitor signal Mon_g1.

Assume here that a logic determination threshold (Vdet_st1) for determining the logic level used by the signal transmission unit 2_1 and a High output voltage (Vinv_h) of the NOT circuit INV3_1 have a relationship of Expression (1) below. In addition, a High output voltage (Vbuf1_h) of the buffer circuit BUF1 is set to satisfy Expression (1) below.$Vinv_h < Vdet_st 1 < Vbuf 1 _h$ (1)

When the potential of the High voltage (Vinv_h) of the NOT circuit INV3_1 is less than the logic determination threshold (Vdet_buf1) for determining the logic level of the buffer circuit BUF1, the buffer circuit BUF1 outputs Low on the monitor signal Mon_g1. A low-level gate monitor signal Mon_g1 transmits information (i.e., being at a low level) to the MCU 1 via the signal transmission unit 2_1.

Alternatively, when the potential of the High voltage (Vinv_h) of the NOT circuit INV3_1 is equal to or higher than Vdet_buf1, High (Vbuf1_h) is output on the gate monitor signal Mon_g1. The signal transmission unit 2_1 thus identifies the signal transmitted from the gate monitor unit 12A as High, and transmits the signal to the MCU 1.

Note that when Vdet_st1 and Vinv_h satisfy Expression (2) below, the High output voltage (Vinv_h) of the NOT circuit INV3_1 is sufficiently high. In this case, the configuration may be such that the buffer circuit BUF1 is not provided. $Vdet_st 1 < Vinv_h$ (2)

According to the gate monitor unit 12A illustrated in FIG. 4, consolidation of terminals and some of the internal circuits enables the circuit scale to be reduced and cost to be reduced.

### (Modification of gate monitor unit (separated configuration))

A modification of the configuration of the gate monitor unit in the present embodiment will next be described additionally.

FIG. 12 illustrates a modification of the configuration (separated configuration) of the gate monitor unit according to the present embodiment.

A gate monitor unit 12C illustrated in FIG. 12 is configured to generate reference voltages individually for Vth_mon (gate state determination threshold) and Vth_mc (mirror clamp operation threshold).

The comparator CMP1_1 receives two inputs that are the voltage of Vth_mon and the voltage of the gate G1. A reference voltage generation circuit 1310 generates the voltage of Vth_mon and inputs the voltage to an input terminal (for example, the non-inverting input terminal) of the comparator CMP1_1.

The comparator CMP2_1 receives two inputs that are the voltage of Vth_mc and the voltage of the gate G1. A reference voltage generation circuit 1320 generates the voltage of Vth_mc and inputs the voltage to an input terminal (for example, the non-inverting input terminal) of the comparator CMP2_1.

### (Modification of gate monitor unit (partially shared threshold configuration))

FIG. 13 illustrates a modification of the configuration (partially shared threshold configuration) of the gate monitor unit according to the present embodiment.

A gate monitor unit 12D illustrated in FIG. 13 is configured to generate reference voltages individually for Vth_mon (gate state determination threshold) and Vth_mc (mirror clamp operation threshold). However, the threshold voltages are configured to be generated partly in common.

A series circuit including a reference voltage generation circuit 1410 and a reference voltage generation circuit 1420 is connected between the reference potential (VSS3_1) and an input terminal (for example, the non-inverting input terminal) of the comparator CMP2_1. The reference voltage generation circuit 1410 and the reference voltage generation circuit 1420 have a connection point thereof connected to an input terminal (for example, the non-inverting input terminal) of the comparator CMP1_1.

The comparator CMP1_1 receives two inputs that are the voltage of Vth_mon and the voltage of the gate G1. The reference voltage generation circuit 1410 generates the voltage of Vth_mon and inputs the voltage to an input terminal (for example, the non-inverting input terminal) of the comparator CMP1_1.

The comparator CMP2_1 receives two inputs that are the voltage of Vth_mc and the voltage of the gate G1. The voltage of Vth_mc is a voltage obtained by adding the voltage generated by the reference voltage generation circuit 1420 to the voltage of Vth_mon generated by the reference voltage generation circuit 1410.

In the gate monitor units illustrated in FIGS. 12 and 13, the gate state determination threshold (Vth_mon) of the gate state determination circuit 14 is set to the same value as the mirror clamp operation threshold (Vth_mc) of the mirror clamp circuit 15 or to a value smaller than the mirror clamp operation threshold (Vth_mc).

As described above, the gate drive device (the gate drive control device 10) according to the present embodiment is a gate drive control device that drives the gate of the first semiconductor element (the first semiconductor element 31). The gate drive control device includes a mirror clamp circuit (the mirror clamp circuit 15) that holds a gate voltage at a low level when the gate voltage of the first semiconductor element falls below a predetermined control threshold (Vth_mc), and a gate monitor circuit (the gate state determination circuit 14) that detects that the gate voltage of the first semiconductor element has fallen below a predetermined detection threshold (Vth_mon) of positive potential. In the gate drive control device, in addition, the gate monitor circuit is configured to, when the first semiconductor element is turned off, detect that the gate voltage of the first semiconductor element has fallen below a detection threshold, simultaneously with, or after, the start of operation of the mirror clamp circuit.

According to the present embodiment, the gate monitor circuit detects a gate turn-off after the mirror clamp circuit operates to ensure a gate turn-off of the semiconductor element of the self arm. This enables a more certain gate turn-off detection result to be obtained, and more accurate gate information to be used in gate drive control. A configuration in which an MCU or the like generates a dead time using a gate turn-off detection result can prevent a short circuit between the upper and lower arms while driving the semiconductor elements included in the arms at high speed.

In addition, setting the detection threshold (Vth_mon) to a positive potential relative to GND (FIG. 3) can ensure that the gate potential is at a low level more promptly, and detect a gate turn-off more quickly. This can also lead to reduction in dead time generated by an active dead time control unit (described later).

In addition, setting each threshold to a positive potential enables elimination of a generation circuit associated with generation of a negative potential and a diagnosis circuit with respect to a negative potential, and thus enables cost reduction.

### <Second Embodiment>

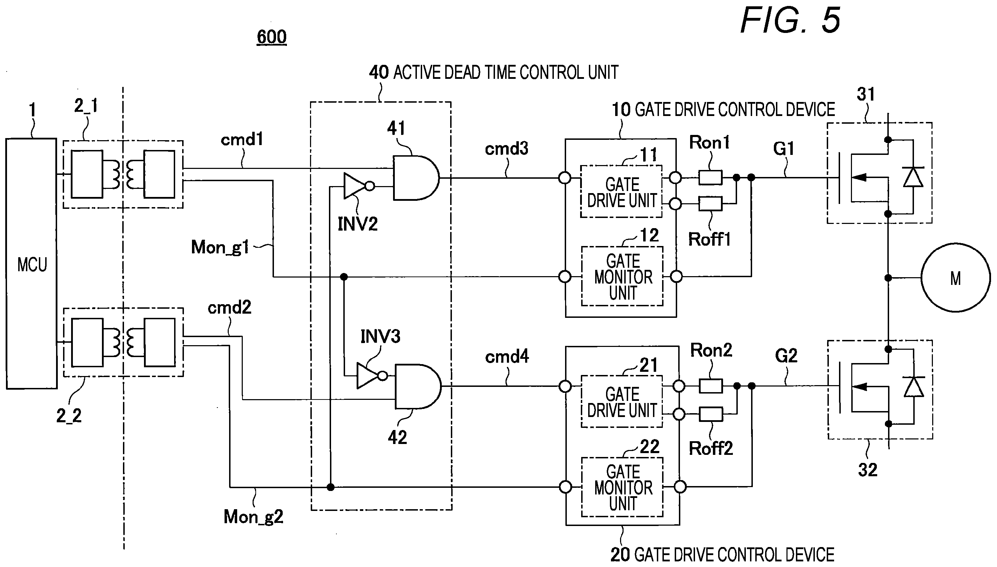

A configuration of an inverter device according to a second embodiment of the present invention will next be described with reference to FIG. 5.

### [Configuration of Inverter Device]

FIG. 5 is a diagram illustrating an example of a configuration of the inverter device according to the second embodiment of the present invention. The following description will describe an inverter device 600 illustrated in FIG. 5 focusing on portions of the configuration different from the configuration of the inverter device 100 according to the first embodiment illustrated in FIG. 1.

The inverter device 600 includes an active dead time control unit 40 in addition to the components of the inverter device 100 according to the first embodiment. The active dead time control unit 40 corresponds to the active dead time configuration described herein in the background art section. The active dead time control unit 40 is provided between the signal transmission units 2_1 and 2_2 and the gate drive control devices 10 and 20. The active dead time control unit 40 turns off one of the semiconductor elements and then turns on another one of the semiconductor elements using the gate state determination results in the gate monitor units 12 and 22 in the gate drive control devices 10 and 20 to thus generate dead times of the first semiconductor element 31 and of the second semiconductor element 32.

The active dead time control unit 40 includes a NOT circuit INV2, a NOT circuit INV3, an AND circuit 41, and an AND circuit 42.

The NOT circuit INV2 outputs an inverted logic level of the gate monitor signal Mon_g2 to the AND circuit 41.

The NOT circuit INV3 outputs an inverted logic level of the gate monitor signal Mon_g1 to the AND circuit 42.

The AND circuit 41 receives two inputs that are the drive command cmd1 and the inverted logic level of the gate monitor signal Mon_g2, and outputs a logical product of the two inputs to the gate drive unit 11 as a drive command cmd3.

The AND circuit 42 receives two inputs that are the drive command cmd2 and the inverted logic level of the gate monitor signal Mon_g1, and outputs a logical product of the two inputs to the gate drive unit 21 as a drive command cmd4.

An operation of the AND circuit 41 will next be described. When the drive command cmd1 is a turn-on command (High) and the inverted logic level of the gate monitor signal Mon_g2 indicates an off-state decision (High), the AND circuit 41 outputs a turn-on command (High) as the drive command cmd3. Alternatively, when at least one of the drive command cmd1 and the inverted logic level of the gate monitor signal Mon_g2 is Low, the AND circuit 41 outputs a turn-off command (Low) as the drive command cmd3.

Note that the AND circuit 42 is different from the AND circuit 41 only in the signal line connected thereto, and operates in the same manner as the AND circuit 41. Description of operation thereof will therefore be omitted.

### [Gate Detection Operation]

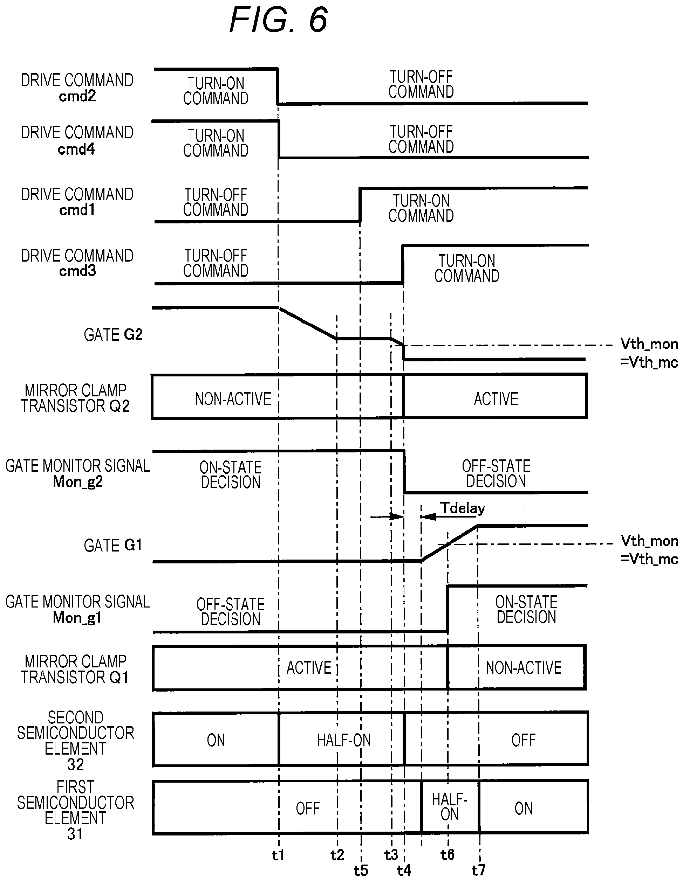

A gate drive operation of the inverter device 600 including the active dead time control unit 40 will next be described with reference to FIG. 6.

FIG. 6 is an example of a timing chart schematically illustrating a gate drive operation of the inverter device 600 including the active dead time control unit 40. The following description will describe the timing chart illustrated in FIG. 6 focusing on portions different from the timing chart according to the first embodiment illustrated in FIG. 3.

At time t1: When a turn-off command (Low) is input on the drive command cmd2 while a turn-off command is input on the drive command cmd1, the drive command cmd4 also becomes a turn-off command (Low) through the AND circuit 42.

At time t5: An increased processing amount in the MCU 1 prevents a dead time from being secured in the MCU 1, thereby causing a turn-on command (High) to be input on the drive command cmd1 while the second semiconductor element 32 is in a half-on state. Meanwhile, the gate monitor signal Mon_g2 indicates an on-state decision (High), and the operation of the AND circuit 41 causes the drive command cmd3 to continue to indicate a turn-off command (Low).

At time t4: The gate G2 potential falls below Vth_mc, and the mirror clamp circuit 15 starts operation and performs control to provide low impedance between the gate G2 and VSS2_2, thereby causing the gate G2 potential to decrease to the VSS2_2 potential. At the same time, the gate G2 potential falls below Vth_mon, thereby causing an off-state decision (Low) to be output on the gate monitor signal Mon_g2. Due to the drive command cmd1 indicating a turn-on command (High) and the inversion of the gate monitor signal Mon_g2 by the NOT circuit INV2, the above operation causes the AND circuit 41 to output a turn-on command (High) on the drive command cmd3. Then, after the delay time (Tdelay), the transistor Mp2 is turned on and the transistor Mn2 is turned off in the gate drive control device 20. This causes the potential of the gate G1 of the first semiconductor element 31 to start to rise, and the first semiconductor element 31 to start to transition to the on-state.

The first semiconductor element 31 is in a half-on state during a period from a time at which the gate G1 potential starts to rise after the delay time Tdelay elapses from time t4 to time t7 when the gate G1 potential rises completely.

As described above, the gate drive device according to the present embodiment includes the active dead time control unit (the active dead time control unit 40) that turns on the second semiconductor element (the second semiconductor element 32) of the opposite arm connected in series with the first semiconductor element (the first semiconductor element 31) after the gate monitor circuit (the gate state determination circuit 14) detects that the gate voltage of the first semiconductor element has fallen below the detection threshold (Vth_mon).

According to the present embodiment described above, the active dead time control unit 40 turns on one of the semiconductor elements after another one of the semiconductor elements is turned off, using gate state determination results in the gate monitor units 12 and 22 in the gate drive control devices 10 and 20. This enables, in the present embodiment, driving of the semiconductor elements included in the arms at a higher speed than in the first embodiment while preventing a short circuit between the upper and lower arms.

In addition, according to the present embodiment, even when the MCU 1 (microcontroller) fails to secure a sufficient dead time, the gate drive control device (GDIC) enables the dead time to be secured.

For example, according to the inverter device 600 according to the present embodiment described above, it is possible to avoid a vehicle failure due to a short circuit between the upper arm and the lower arm in the active dead time configuration.

Moreover, turn-off of the gate of a semiconductor element can be detected with higher certainty without adding a circuit to a conventional circuit.

### <Third Embodiment>

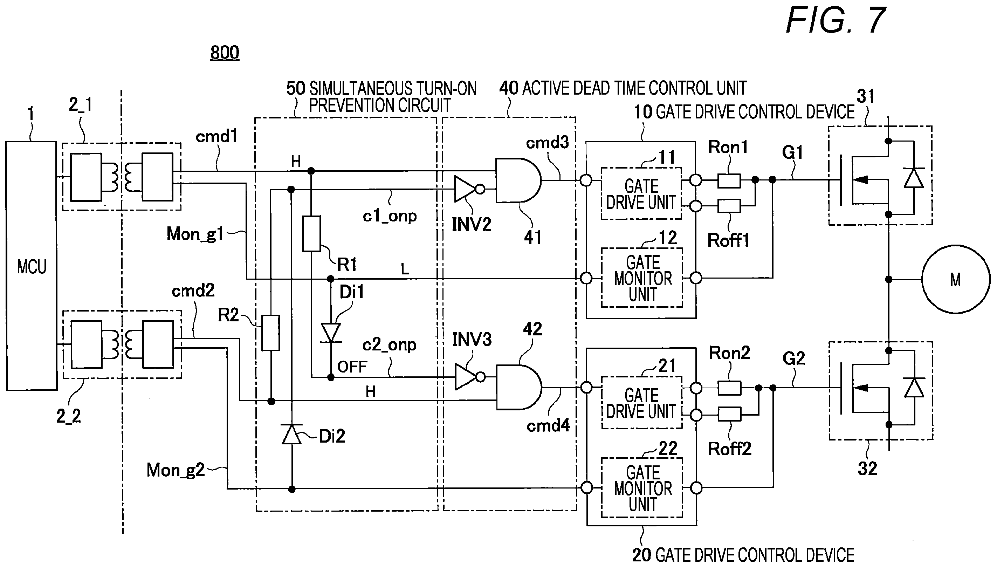

A configuration of an inverter device according to a third embodiment of the present invention will next be described with reference to FIG. 7.

### [Configuration of Inverter Device]

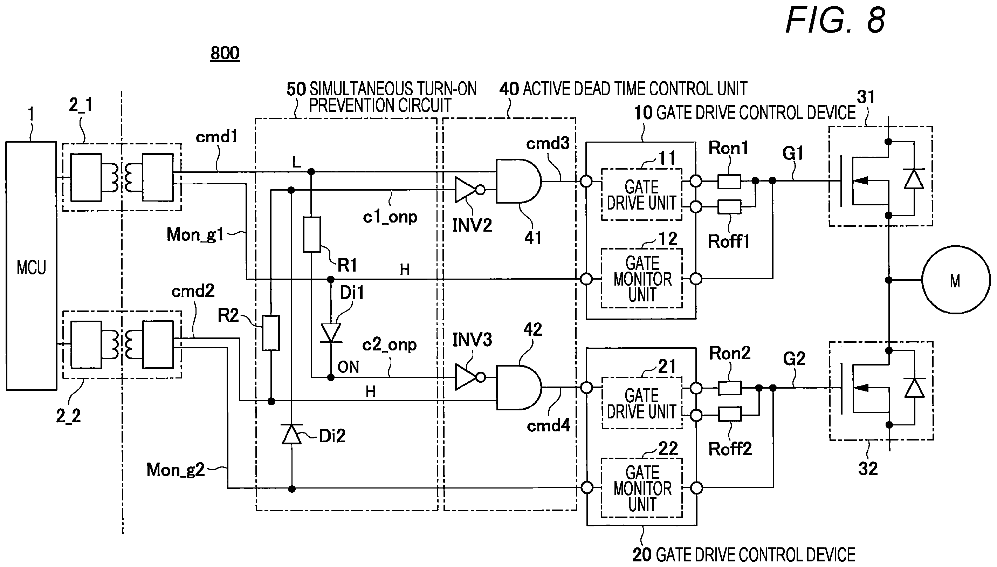

FIG. 7 is a diagram illustrating an example of a configuration (option 1) of the inverter device according to the third embodiment of the present invention. FIG. 8 is a diagram illustrating an example of a configuration (option 2) of the inverter device according to the third embodiment of the present invention. FIGS. 7 and 8 differ in the logic levels of signals flowing through signal lines. The following description will describe an inverter device 800 illustrated in FIGS. 7 and 8 focusing on portions of the configuration different from the configuration of the inverter device 600 according to the second embodiment illustrated in FIG. 5.

The inverter device 800 includes a simultaneous turn-on prevention circuit 50 in addition to the components of the inverter device 600 according to the second embodiment. The simultaneous turn-on prevention circuit 50 is provided between the signal transmission units 2_1 and 2_2 and the active dead time control unit 40.

The simultaneous turn-on prevention circuit 50 is a circuit that prevents simultaneous turn-on in the gate drive control devices 10 and 20 in response to simultaneous turn-on commands from the MCU 1. The simultaneous turn-on prevention circuit 50 prevents the upper and lower arms from being simultaneously turned on by masking a turn-on command indicated on one drive command when a turn-on command (High) is indicated on another drive command.

The simultaneous turn-on prevention circuit 50 includes a resistor R1, a resistor R2, a diode Di1, and a diode Di2.

The resistor R1 transmits the drive command cmd1 to the NOT circuit INV3 as a simultaneous turn-on prevention command c2_onp.

The resistor R2 transmits the drive command cmd2 to the NOT circuit INV2 as a simultaneous turn-on prevention command c1_onp.

The diode Di1 transmits the gate monitor signal Mon_g1 to the NOT circuit INV3 as the simultaneous turn-on prevention command c2_onp.

The diode Di2 transmits the gate monitor signal Mon_g2 to the NOT circuit INV2 as the simultaneous turn-on prevention command c1_onp.

In this respect, the resistor R1 and the diode Di1 determine which logic level is to be output as the simultaneous turn-on prevention command c2_onp when the logic levels of the drive command cmd1 and of the gate monitor signal Mon_g1 are different from each other. For example, when the gate monitor signal Mon_g1 is Low and the drive command cmd1 is High, a reverse voltage appears across the diode Di1. Thus, the logic level of the drive command cmd1 is output as the simultaneous turn-on prevention command c2_onp.

Meanwhile, when the gate monitor signal Mon_g1 is High and the drive command cmd1 is Low, a forward voltage appears across the diode Di1. Thus, the logic level of the gate monitor signal Mon_g1 is output as the simultaneous turn-on prevention command c2_onp.

The resistor R1 is provided to give priority to the logic level of the drive command cmd1 or of the gate monitor signal Mon_g1, whichever is High. When the drive command cmd1 is High and the gate monitor signal Mon_g1 is Low, the diode Di1 is in an off-state due to reverse bias, and the simultaneous turn-on prevention command c2_onp therefore becomes High (FIG. 7). Even when a High signal (simultaneous turn-on control) is input on the drive command cmd2 in this situation, the simultaneous turn-on prevention command c2_onp is High (inhibit command), thereby preventing a simultaneous on-state.

Meanwhile, when the drive command cmd1 is Low and the gate monitor signal Mon_g1 is High as illustrated in FIG. 8, the diode Di1 is in an on-state due to forward bias, and the simultaneous turn-on prevention command c2_onp therefore becomes High. Even when a High signal is input on the drive command cmd2, a simultaneous on-state is prevented in the same manner as when the inverter device 600 illustrated in FIG. 5 operates.

The resistor R1 is set to have a value that allows the logic level of the simultaneous turn-on prevention command c2_onp and the logic level of the drive command cmd1 to be maintained even when these logic levels are different from each other. For example, an excessively large value of the resistor R1 may invert the logic level. Note that the resistor R2 and the diode Di2 are different from the resistor R1 and the diode Di1 only in the signal line connected thereto, and operate in the same manner as these components. Description of operation thereof will therefore be omitted.

As described above, in the inverter device 800 according to the present embodiment, the gate monitor circuits (e.g., the gate state determination circuits 14) detect that the gate voltage of the first semiconductor element 31 and the gate voltage of the second semiconductor element 32 have fallen below a predetermined detection threshold. In addition, the inverter device 800 includes gate drive units (the gate drive units 11 and 12) that drive the gate of the first semiconductor element 31 and the gate of the second semiconductor element 32, and a simultaneous turn-on prevention circuit (the simultaneous turn-on prevention circuit 50) that inhibits the gate drive unit from driving the gate of one of the semiconductor elements when the gate monitor circuit has not detected a decrease in the gate voltage of another one of the semiconductor elements to below a predetermined detection threshold.

According to the present embodiment having the above configuration, an active dead time that can prevent simultaneous turn-on of the upper and lower arms can be realized with a small number of components.

### [Gate Drive Operation]

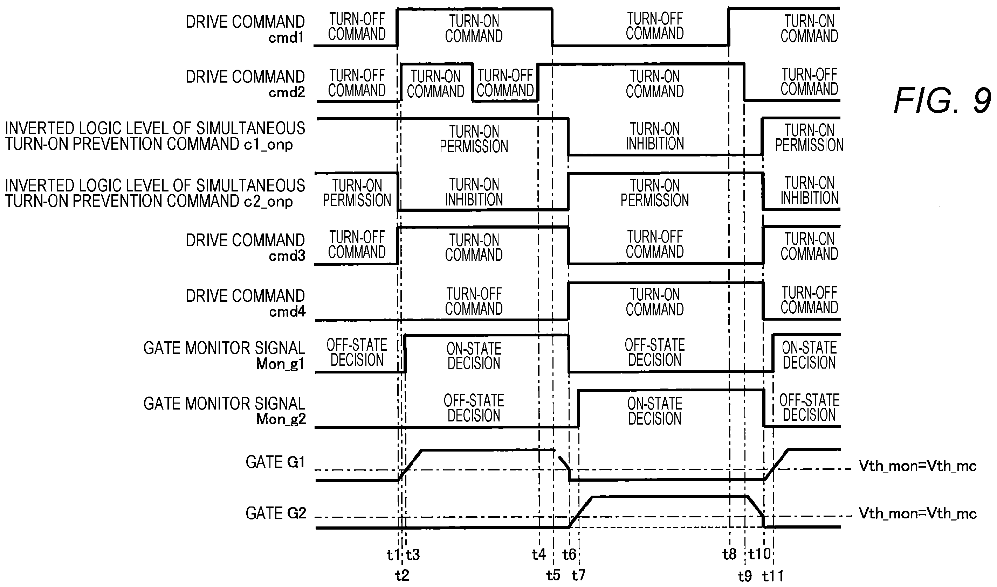

A gate drive operation of the inverter device 800 including the simultaneous turn-on prevention circuit 50 will next be described with reference to FIG. 9.

FIG. 9 is an example of a timing chart schematically illustrating a gate drive operation of the inverter device 800 including the simultaneous turn-on prevention circuit 50. The following description will describe the timing chart illustrated in FIG. 9 focusing on portions different from the timing chart according to the second embodiment illustrated in FIG. 6. In addition, in FIG. 9, operation from time t8 to time t11 itself is the same as the operation from time t4 to time t7 only except that the semiconductor element to be driven is different. Description of the operation will therefore be omitted. Note that the example of FIG. 9 assumes that the drive command cmd1 and the drive command cmd2 erroneously transition to turn-on commands (High) simultaneously.

At time t1: When a turn-on command (High) is input on the drive command cmd1 while the inverted logic level of the simultaneous turn-on prevention command c1_onp is in a turn-on permitted state (High), the drive command cmd3 transitions to a turn-on command (High). This causes the gate G1 voltage to start to rise. At the same time, the inverted logic level of the simultaneous turn-on prevention command c2_onp transitions to turn-on inhibition (Low) through the resistor R1.

At time t2: Even when a turn-on command (High) is input on the drive command cmd2, turn-on inhibition (Low) is being input through the resistor R1 as the inverted logic level of the simultaneous turn-on prevention command c2_onp. Thus, the AND circuit 42 maintains the turn-off command (Low) of the drive command cmd4.

At time t3: The potential of the gate G1 reaches or exceeds Vth_mon, thereby causing the gate monitor signal Mon_g1 to indicate an on-state decision. In the example of FIG. 9, a turn-off command (Low) is input on the drive command cmd2 before time t4.

At time t4: A turn-on command (High) is input on the drive command cmd2 after the above turn-off command, but turn-on inhibition (Low) is being input on the inverted logic level of the simultaneous turn-on prevention command c2_onp through the diode Di1. Thus, the AND circuit 42 maintains the turn-off command (Low) of the drive command cmd4.

At time t5: A turn-off command (Low) is input on the drive command cmd1, and the potential of the gate G1 thus starts to decrease.

At time t6: The potential of the gate G1 falls below Vth_mc, and the mirror clamp circuit 15 starts operation, thereby causing the potential of the gate G1 to decrease to the VSS2_1 potential. At the same time, falling of the potential of the gate G1 below Vth_mon causes an off-state decision (Low) to be output on the gate monitor signal Mon_g1. This causes the inverted logic level of the simultaneous turn-on prevention command c2_onp to transition to turn-on permission (High). At this stage, the turn-on command is being input on the drive command cmd2, and the gate G2 potential thus starts to rise. At the same time, the inverted logic level of the simultaneous turn-on prevention command c1_onp transitions to turn-on inhibition (Low) through the diode Di2.

At time t7: The gate G2 potential reaches or exceeds Vth_mon, thereby causing the gate monitor signal Mon_g2 to indicate an on-state decision.

As described above, in the inverter device 800 according to the present embodiment, the simultaneous turn-on prevention circuit 50 is connected to the gate drive control device 10 via the active dead time control unit 40. In the present embodiment, provision of the simultaneous turn-on prevention circuit 50 causes turning on of one of the semiconductor elements to be inhibited when the gate state determination circuit 14 has not detected a decrease in the gate voltage of another one of the semiconductor elements to below a predetermined detection threshold.

According to the present embodiment having the above configuration, simultaneous turn-on of the upper and lower arms can be avoided by the simultaneous turn-on prevention circuit 50 (GDIC) even when turn-on commands for the upper and lower arms are simultaneously input due to a software malfunction of the microcontroller (MCU 1).

### <Fourth Embodiment>

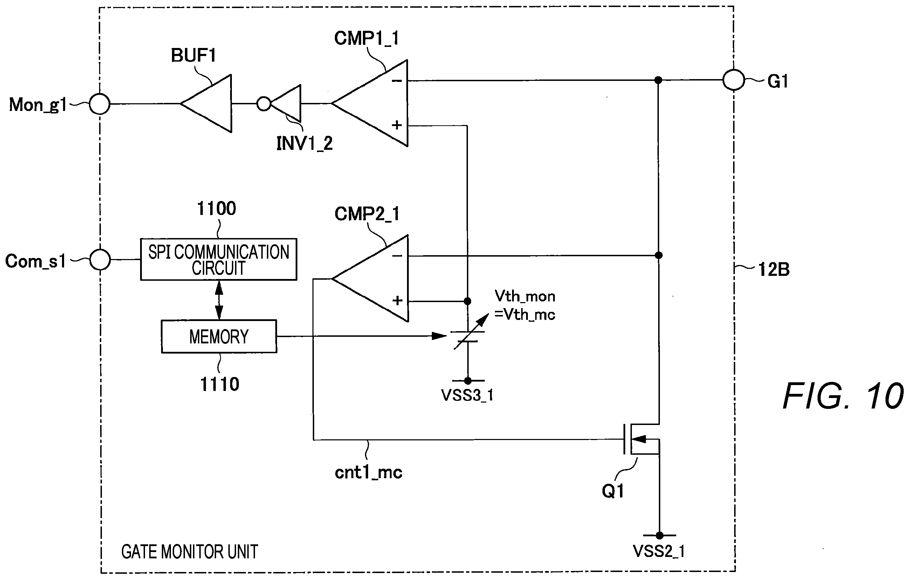

A configuration of an inverter device according to a fourth embodiment of the present invention will next be described with reference to FIG. 10.

FIG. 10 is a diagram illustrating an example of a configuration of a gate monitor unit included in the inverter device according to the fourth embodiment of the present invention. A gate monitor unit 12B illustrated in FIG. 10 is an example of a configuration in which the values of Vth_mon and of Vth_mc can be rewritten via SPI communication.

The following description will describe the gate monitor unit 12B focusing on portions of the configuration different from the configuration of the gate monitor unit 12 according to the first embodiment illustrated in FIG. 2. Although the gate monitor unit 12B includes the buffer circuit BUF1, the buffer circuit BUF1 may be not provided when an applicable condition is satisfied as described with reference to FIG. 4.

The gate monitor unit 12A includes an SPI communication circuit 1100 and a memory 1110 in addition to the components of the gate monitor unit 12 according to the first embodiment. Serial peripheral interface (SPI) is one of standards for data transmission path. SPI is a bus type connection system in which a plurality of devices share one transmission path, and employs a serial communication system using one signal line for communication in one direction.

The SPI communication circuit 1100 performs an operation associated with a command input using SPI communication Com_s1. The SPI communication circuit 1100, for example, receives a command to change the value of Vth_mon via the SPI communication Com_s1, and rewrites a value of Vth_mon stored in the memory 1110. In addition, the SPI communication circuit 1100 may transmit information of whether the gate is being driven (states of the drive command cmd1 and of the drive command cmd2) using the SPI communication Com_s1. Note that the SPI communication may be configured to be able to exchange data bidirectionally by addition of a signal line.

The memory 1110 updates Vth_mon or Vth_mc with the information stored therein. The memory 1110 changes the value of Vth_mon on the basis of the value recorded in the memory 1110 when no gate drive is being performed by the semiconductor element (i.e., when both the drive command cmd1 and the drive command cmd2 indicate a turn-off command). The memory 1110 can be a nonvolatile storage such as a ROM, a RAM, or a solid state drive (SSD).

### [Threshold Change Operation]

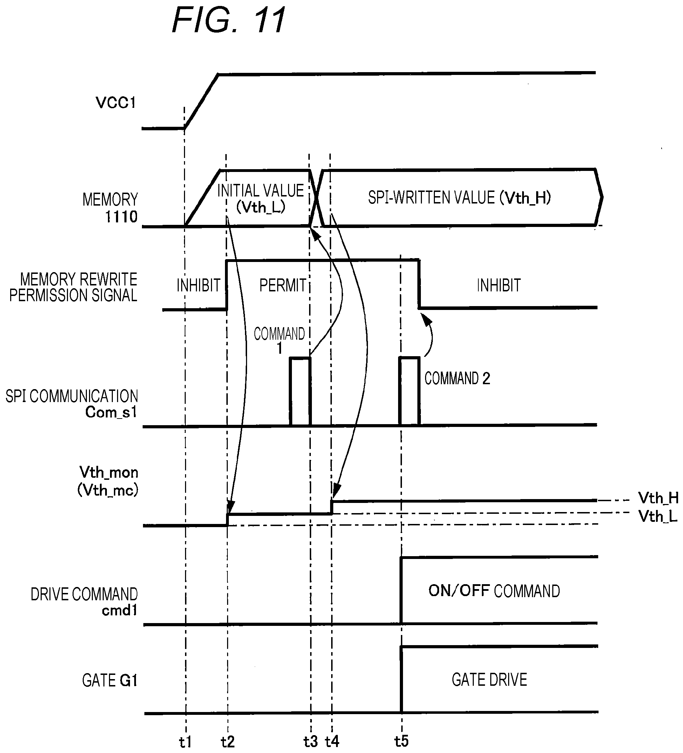

A threshold change operation of the gate monitor unit 12B will next be described with reference to FIG. 11.

FIG. 11 illustrates an example of a timing chart schematically illustrating a threshold change operation of the gate monitor unit 12B. FIG. 11 illustrates an example of the start operation in the gate drive control device 10 including the gate monitor unit 12B illustrated in FIG. 10.

At time t1: The power supply VCC1 (FIG. 1) starts power supply, and the potential of the power supply VCC1 thus starts to rise.

At time t2: After the potential of the power supply VCC1 rises, the SPI communication circuit 1100 sets a memory rewrite permission signal to "permit" (High in the present embodiment), in relation to the memory 1110. The memory 1110 updates Vth_mon with an initial value (Vth_L) of Vth_mon recorded in memory 1110.

At time t3: Command 1 for changing the Vth_mon value to a Vth_H value is input via the SPI communication Com_s1. The SPI communication circuit 1100 rewrites the initial value (Vth_L) in the memory 1110 to an SPI-written value (Vth_H) in accordance with Command 1.

At time t4: The memory 1110 updates Vth_mon with the newly recorded value of Vth_H.

At time t5: The drive command cmd1 is input from the MCU 1 to the SPI communication circuit 1100, and gate driving is thus started on the basis of a turn-on/turn-off command of the drive command cmd1. At this time, the SPI communication circuit 1100 receives Command 2 (during gate driving) via the SPI communication Com_s1. The SPI communication circuit 1100 sets the memory rewrite permission signal to "inhibit" (Low in the present embodiment) according to Command 2.

The gate monitor unit 12B according to the present embodiment described above has a control threshold (Vth_mc) and a reference voltage for determining the detection threshold (Vth_mon). The reference voltage can be set before the start of gate driving. The reference voltage can be generated by, for example, the reference voltage generation circuit 13 (FIG. 2).

In the present embodiment having such configuration, the mirror clamp operation and the gate turn-off detection can be performed at optimal timings according to the control threshold (Vth_mc) and the detection threshold (Vth_mon) for the power device (the first semiconductor element 31 or the second semiconductor element 32) to be driven.

In addition, although the present embodiment has been described with respect to the example in which Vth_mon is changed via the SPI communication Com_s1 at the start of the gate drive control device, Vth_mon may be changed even after the start depending on the state of the system as long as the gate is not being driven. For example, assume that longterm use has resulted in a decrease in a gate voltage threshold of a power device (the first semiconductor element 31 or the second semiconductor element 32). In such case, a microcontroller such as the MCU 1 may be configured to detect deterioration of the power device and to change Vth_mon to an appropriate value via the SPI communication Com_s1 on an as-needed basis.

In the gate monitor unit 12B according to the present embodiment, at least one of the control threshold (Vth_mc) and the detection threshold (Vth_mon) is configured to be settable by an external signal. In addition, the setting value can be changed depending on the state of the system after the setting value is set before the start of gate driving.

In the present embodiment having such configuration, setting the control threshold and the detection threshold using SPI or an external port (not illustrated) upon the start of the inverter device enables optimal thresholds for the power device to be driven to be set without changing the circuit configuration.

As described above, the present invention is not limited to the above-described embodiments, and obviously, various other modifications and application examples are also applicable without departing from the gist of the invention described in the claims.

For example, the above-described embodiments have been provided to describe the configurations thereof in detail and specifically to describe the present invention in an easy-to-understand manner. The present invention is not necessarily limited to configurations including all the described components. In addition, a part of the configuration of one embodiment can be replaced with a component of another embodiment. Moreover, a component of one embodiment can be added to the components of another embodiment. Moreover, in each embodiment, another component can be added to a part of the configuration, a part of the configuration can be replaced with another component, or a part of the configuration can be removed.

For example, the configurations of the gate monitor units 12,12A, 12C, and 12D illustrated in FIGS. 2, 4, 12, and 13 are applicable not only to the first embodiment but also to the second to fourth embodiments. In addition, the gate monitor unit 12B in the fourth embodiment is also applicable to the first to third embodiments.

Moreover, for the purpose of reducing the delay time due to signal transmission, part of the configurations, circuits, and functions described in each embodiment may be integrated in one semiconductor device. That is, one or more of the gate drive unit, the mirror clamp circuit, the gate monitor circuit (e.g., the gate state determination circuit 14), the active dead time control unit (the active dead time control unit 40), and the simultaneous turn-on prevention circuit are integrated in one semiconductor device. In addition, the configuration may be such that a notification of a decrease in the gate voltage of either the first semiconductor element or the second semiconductor element to below a predetermined detection threshold is output to the outside of the semiconductor device.

Use of such configuration can reduce the wiring length of the wiring for transmitting each signal by the integration, and can thus reduce the delay time of signal transmission.

In addition, some or all of the above-described configurations, functions, processing units, and the like can be implemented in hardware by, for example, designing components in an integrated circuit. The hardware may be a processor device in a broad sense such as a field programmable gate array (FPGA) or an application specific integrated circuit (ASIC).

In addition, in the above-described embodiments, the control lines and information lines that have been illustrated are what are considered to be necessary for explanation, and not all of the control lines and information lines associated with the product have necessarily been illustrated. In practice, almost all the components can be thought to be connected to each other.

### Reference Signs List

10, 20 gate drive control device
11 gate drive unit
12, 12A to 12D gate monitor unit
13 reference voltage generation circuit
14 gate state determination circuit
15 mirror clamp circuit
21 gate drive unit
22 gate monitor unit
31 first semiconductor element
32 second semiconductor element
40 active dead time control unit
50 simultaneous turn-on prevention circuit
100, 600, 800 inverter device
G1, G2 gate

## Claims

1. A gate drive control device that drives a gate of a first semiconductor element, the gate drive control device comprising:
a mirror clamp circuit that when a gate voltage of the first semiconductor element falls below a predetermined control threshold, holds the gate voltage at a low level; and
a gate monitor circuit that detects that the gate voltage of the first semiconductor element has fallen below a predetermined detection threshold of positive potential,
wherein the gate monitor circuit is configured to, when the first semiconductor element is turned off, detect that the gate voltage of the first semiconductor element has fallen below the detection threshold, simultaneously with, or after, a start of operation of the mirror clamp circuit.

2. The gate drive control device according to claim 1, comprising:
an active dead time control unit that turns on a second semiconductor element of an opposite arm after the gate monitor circuit detects that the gate voltage of the first semiconductor element has fallen below the detection threshold, the second semiconductor element being connected in series with the first semiconductor element.

3. The gate drive control device according to claim 2, wherein
the detection threshold used by the gate monitor circuit is set to a value same as the control threshold used by the mirror clamp circuit or to a value less than the control threshold.

4. The gate drive control device according to claim 3, wherein
when the gate monitor circuit has not detected a decrease in a gate voltage of one semiconductor element to below a predetermined detection threshold, turning on of another semiconductor element is inhibited.

5. The gate drive control device according to claim 4, wherein
the gate monitor circuit detects that the gate voltage of the first semiconductor element and a gate voltage of the second semiconductor element have fallen below a predetermined detection threshold,
the gate drive control device comprises a gate drive unit that drives the gate of the first semiconductor element and a gate of the second semiconductor element, and
the gate drive control device comprises a simultaneous turn-on prevention circuit that when the gate monitor circuit has not detected a decrease in the gate voltage of one semiconductor element to below the predetermined detection threshold, inhibits the gate drive unit from driving the gate of another semiconductor element.

6. The gate drive control device according to claim 3, comprising:
a reference voltage for determining the control threshold and the detection threshold,
wherein the reference voltage is set before a start of gate driving.

7. The gate drive control device according to claim 3, wherein
at least one of the detection threshold or the control threshold is configured to be settable according to information of an external signal, and is changed according to the information of the external signal depending on a state of the first semiconductor element after being set before a start of gate driving.

8. The gate drive control device according to any one of claims 1 to 7, wherein
one or more of the gate drive unit, the mirror clamp circuit, the gate monitor circuit, the active dead time control unit, and the simultaneous turn-on prevention circuit are integrated in one semiconductor device, and
the semiconductor device is configured to output a notification of a decrease in a gate voltage of either the first semiconductor element or the second semiconductor element to below a predetermined detection threshold to an outside of the semiconductor device.

9. A power conversion device, comprising:
a gate drive unit that drives a gate of a first semiconductor element and a gate of a second semiconductor element, the first semiconductor element and the second semiconductor element constituting an upper arm and a lower arm;
a mirror clamp circuit that when a gate voltage of the first semiconductor element and a gate voltage of the second semiconductor element fall below a predetermined control threshold, holds the gate voltage of that semiconductor element at a low level; and
a gate monitor circuit that detects that the gate voltage of the first semiconductor element and the gate voltage of the second semiconductor element have fallen below a predetermined detection threshold of positive potential,
wherein the gate monitor circuit is configured to, when one semiconductor element is turned off, detect that the gate voltage of the one semiconductor element has fallen below the detection threshold, simultaneously with, or after, a start of operation of the mirror clamp circuit.
